(19) **Europäisches Patentamt**
**European Patent Office**
**Office européen des brevets**

(11) **EP 2 549 255 B1**

(12) **EUROPÄISCHE PATENTSCHRIFT**

(45) Veröffentlichungstag und Bekanntmachung des Hinweises auf die Patenterteilung:
**05.10.2016 Patentblatt 2016/40**

(51) Int Cl.:
***G01L 3/10*** *(2006.01)*

(21) Anmeldenummer: **12173496.6**

(22) Anmeldetag: **25.06.2012**

(54) **Sensoranordnung und Verfahren zur berührungslosen Bestimmung des wirksamen Drehmomentes in einer Welle**

Sensor assembly and method for contact-free determination of the effective torque in a shaft

Agencement de capteur et procédé de détermination sans contact du couple efficace dans un arbre

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2011 DE 102011051327**
**08.02.2012 DE 102012101005**

(43) Veröffentlichungstag der Anmeldung:
**23.01.2013 Patentblatt 2013/04**

(73) Patentinhaber: **Helmholtz-Zentrum Dresden - Rossendorf e.V.**
**01328 Dresden (DE)**

(72) Erfinder:
• **Buchenau, Dominique**
**99817 Eisenach (DE)**
• **Schmidt, Gregor**
**10327 Berlin (DE)**
• **Wustmann, Bernd**
**01326 Dresden (DE)**

(56) Entgegenhaltungen:
EP-A1- 1 400 795  EP-A2- 0 261 980
EP-A2- 0 338 227  EP-A2- 1 319 934
DE-A1- 3 704 049  GB-A- 2 232 490

• H Ruser ET AL: "Magnetische Drehmomentmessung mit Low-cost Sensor", , 1. Januar 2002 (2002-01-01), Seite 2557, XP055152418, Gefunden im Internet: URL:http://forschung.unibw.de/berichte/2002/kfrdnjwtdl61pppl2osc0hyts0fk7p.pdf [gefunden am 2014-11-11]

## Beschreibung

### Technisches Gebiet

Die Erfindung betrifft eine kontaktlose Sensoranordnung zur Bestimmung des wirksamen Drehmomentes in einer Welle mit zugehörigem Verfahren zur Verwendung der Sensoranordnung.

### Stand der Technik

Zur kontaktlosen induktiven Lage-, Drehzahl- oder Drehmomentbestimmung sind eine Vielzahl von unterschiedlichen Verfahren und Vorrichtungen bekannt. Die Verfahren beruhen auf den bekannten Prinzipien der mechanisch-magnetischen Umformung. Die unter dem Oberbegriff der mechanisch-magnetischen Umformung beruhenden Detektions- und Messprinzipien unterscheiden sich jedoch erheblich voneinander. Währenddessen sich die magnetostriktiven Messprinzipien die Erfassung einer magnetischen Polarisationsänderung $\Delta J$ infolge einer mechanischen Spannungsänderung $\Delta\sigma$ zu Nutze machen, bildet die Auswertung der spannungsabhängigen Suszeptibilität $\chi(\sigma)$ die Grundlage des magnetoelastischen Messeffektes.

Aus der Schrift DE 102006017727A1 (DAIMLER CHRYSLER AG) 25.10.2007 ist ein Drehmomentaufnehmer einer Welle bekannt, wobei die Erregerspule mit ihrer Spulenlängsachse senkrecht zu einer Wellenlängsachse angeordnet ist. Erfindungsgemäß sind dabei neben der Erregerspule zwei Sensorspulen in Form eines gleichschenkligen Dreiecks so bezüglich der magnetisierbaren Welle angeordnet, dass in der gewählten Anordnung eine Erfassung des Drehmomentes durchführbar ist. Sind weiterhin vier Sensorspulen vorgesehen, ergibt sich die Anordnung so, dass je zwei Sensorspulen in zueinander orthogonalen Ebenen angeordnet sind, wobei deren Spulenlängsachsen und die Längsachse der Erregerspule in der jeweiligen Ebene liegen. Die in der Patentschrift beschriebene, bevorzugte Orientierung der Messanordnung über dem Messobjekt entspricht den sogenannten Hauptspannungslinien der Welle, welche sich aus mechanischen Spannungsverhältnissen ergeben. Das Messprinzip ist daher dem magnetostriktiven Effekt zuzuordnen (JÄHNIG, L.. Drehmomentsensoren auf der Basis des magnetostriktiven Effekts. VDI-Berichte. 1984, Band 509, S. 187-191.)

Eine kontaktlose Messanordnung basierend auf dem magnetoelastischen Effekt ferromagnetischer Materialien zur berührungslosen Messung des Drehmomentes stellen **RUSER, H., et al..** Magnetische Drehmomentmessung mit Low-cost Sensor. *http://forschung.unibwmuenchen.de/berichte/2002/kfrdnjwtdl61pppl2osc0hyts0fk7p.pdf.*vor. Es wird ein magnetischer Kreis aus magnetisierbaren Flussleiteisen aufgebaut, dessen aktiver Teil die magnetisierbare Welle darstellt. Der magnetische Fluss wird dabei von zwei auf dem Flussleiteisen angeordneten Spulen erzeugt, welcher das Messobjekt mehrfach durchsetzt. Eine weitere auf dem Flussleiteisen angeordnete Empfängerspule detektiert die durch mechanische Spannungsänderungen verursachte Veränderung des magnetischen Gesamtflusses als Funktion der magnetischen Permeabilitätsänderung.

Die DE 37 04 049 A1, die EP 0 338 227 A2 und die EP 1 319 934 A2 beschreiben magnetostriktive Vorrichtungen zum Messen von Drehmomenten. Die GB 2 232 490 A, die EP 0 261 980 A2 und die EP 1 400 795 A1 beschreiben weitere Vorrichtungen zum Messen von Drehmomenten. H. Ruser et al. beschreiben in "Magnetische Drehmomentmessung mit Low-cost Sensor" einen Drehmomentsensor unter Ausnutzung des magnetoelastischen Effektes ferromagnetischer Materialien.

### Darstellung der Erfindung

#### Technische Aufgabe

Aufgabe der Erfindung ist es, ein Verfahren und eine berührungslose Anordnung zur berührungslosen Bestimmung des mechanischen Drehmomentes anzugeben, bei dem eine Vorbehandlung des Messobjektes in jeder Hinsicht entfällt.

Das Verfahren mit der erfindungsgemäßen Anordnung soll die bisher ungelösten Probleme der eigenspannungsbedingten Hystereseeffekte, sowie der Begrenzung von Drift und Störeinflüssen im dynamischen Betrieb, überwinden.

#### Technische Lösung

Die Aufgabe wird erfindungsgemäß durch die Merkmale der unabhängigen Ansprüche für die Anordnung und das Verfahren gelöst. Vorteilhafte Aus- und Weiterbildungen der Erfindung sind in den weiteren Ansprüchen angegeben.

Vorteilhafte Wirkungen

Die Vorteile der Erfindung sind

- die Verwendung auch an bestehenden Anlagen auf Grund einer berührungslosen Messung,

- dass die Welle im Messbereich nicht verjüngt ausgeführt, oberflächlich behandelt oder verändert werden muss,

- die Messungen an einer Hohl- oder Vollwelle durchgeführt werden können und

- die Kompensation von zusätzlichen Fehlerquellen resultierend aus den Eigenschaften des Messobjekts durch erfindungsgemäße Messverfahren.

## Kurze Beschreibung der Zeichnungen

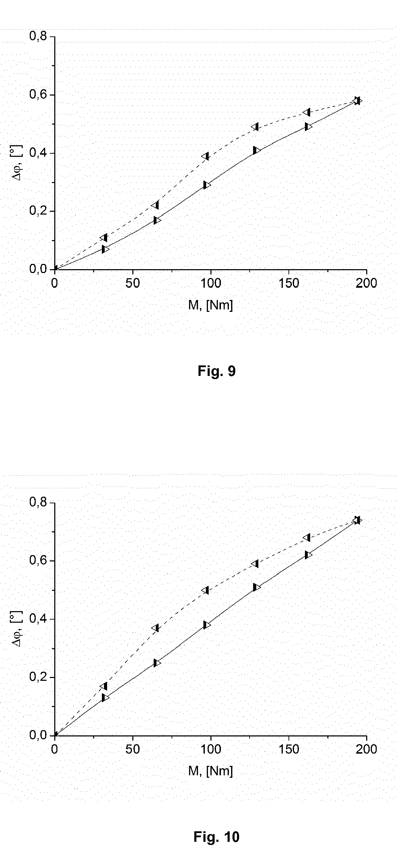

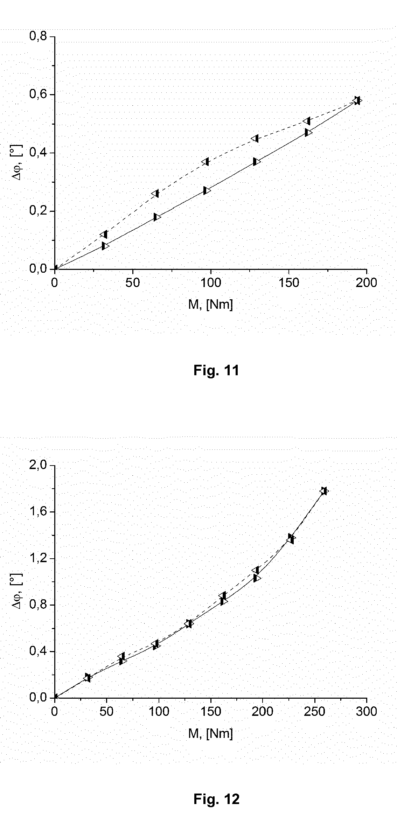

Der Drehmomentsensor wird in **Fig. 1** in der symmetrischen Einstellung, in **Fig. 2** bzw. **Fig. 3** in der fixierten asymmetrischen Einstellung, in **Fig. 4** in der fixierten asymmetrischen Einstellung mit einem partiell aufgetrennten Empfängerkern dargestellt. **Fig. 5** zeigt eine Erweiterung des Drehmomentsensors in der symmetrischen Einstellung mit dem partiell aufgetrennten Empfängerkern, wobei eine Asymmetrisierung (nicht fix) der Empfängeranordnung zu beiden Seiten möglich ist.

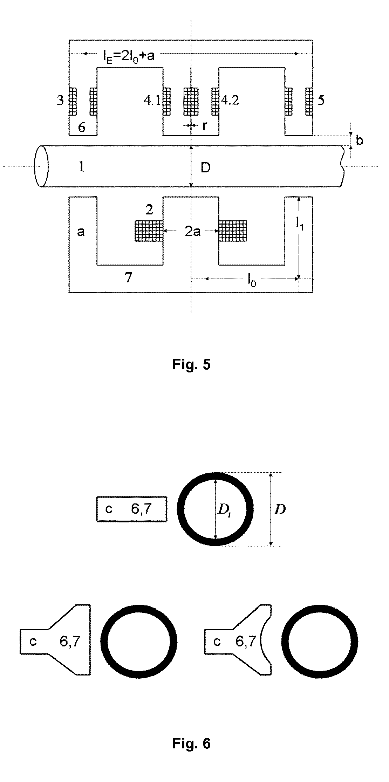

**Fig. 6** zeigt mögliche Beispiele für die Formgebung der Pole des Flussleiteisens.

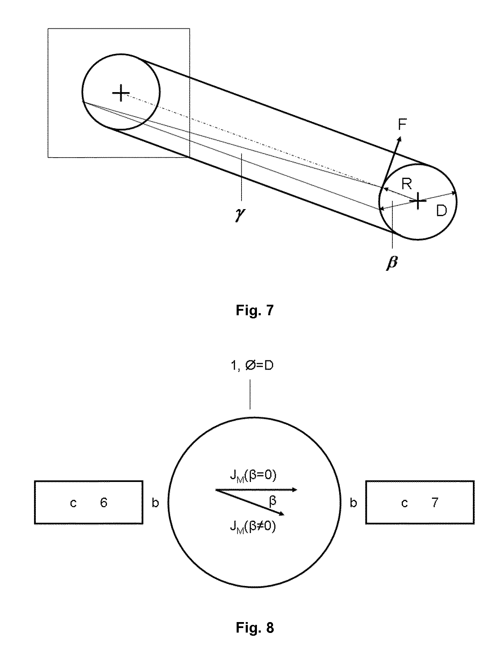

**Fig. 7** und **Fig. 8** zeigen Zusammenhänge einer unter Torsionsbelastung stehenden zylindrischen Welle.
Eine Messung der Phasendifferenz in Abhängigkeit vom mechanischen Drehmoment an einer Hohlwelle zeigt **Fig. 9** in der symmetrischen Anordnung, **Fig. 10** in der asymmetrischen Anordnung, **Fig. 11** in der asymmetrischen Anordnung mit einer vergrößerten Messspaltweite $D + 2b$ und **Fig. 12** in der asymmetrischen Anordnung mit einer größeren Verschiebungs- / * und Eingriffslänge $l_E$ als in den vorhergehenden Abbildungen.

## Ausführliche Zeichnungsbeschreibung

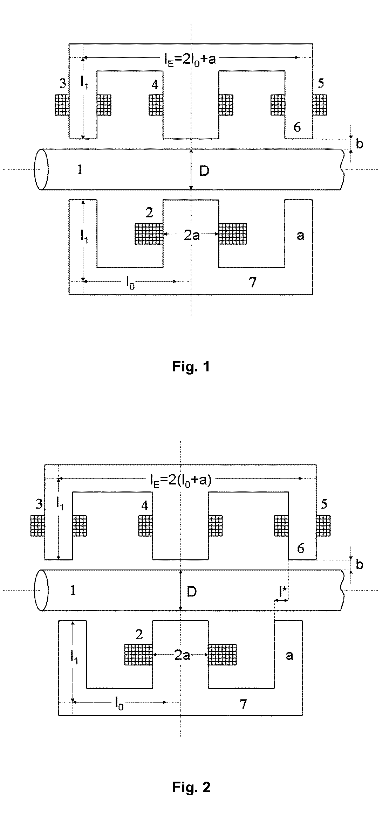

**Fig. 1** zeigt einen Drehmomentsensor in der symmetrischen Einstellung mit dem Messobjekt der Welle **1,** die einen Durchmesser $D$ besitzt; einer Senderspule **2,** den Empfängerspulen **3,4,5;** den Flussleiteisen **6,7.** Der Luftspalt $b$, die Polbreite a , die Eingriffslänge $l_E$, der mittlerer Polabstand $l_0$ des senderseitigen Flussleiteisens und die mittlere Pollänge $l_1$ sind in **Fig. 1** gekennzeichnet.

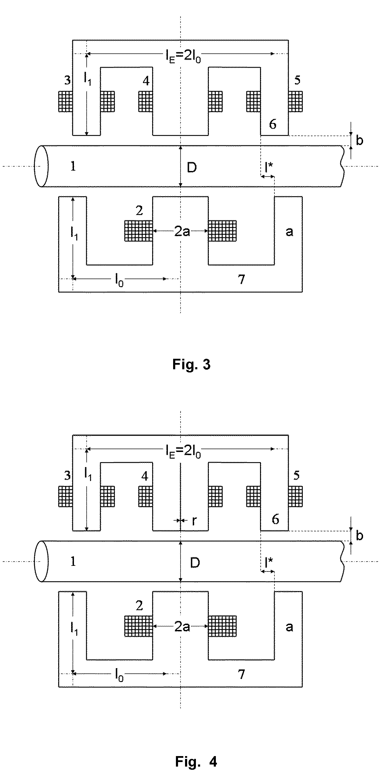

**Fig. 2** bzw. **Fig. 3** zeigt einen Drehmomentsensor in der fixierten asymmetrischen Einstellung wobei zusätzlich zu **Fig. 1** die Verschiebungslänge/ * gekennzeichnet ist.

**Fig. 3** stellt einen Drehmomentsensor in der fixierten asymmetrischen Einstellung und partiell aufgetrennten Empfängerkern der Breiter dar.

**Fig. 5** zeigt eine Erweiterung des Drehmomentsensors in der symmetrischen Einstellung und partiell aufgetrennten Empfängerkern der Breiter $r$. In dieser Ausführung ist auch eine asymmetrische Anordnung (nicht fix) der beiden Empfänger **3,5** an den beiden Seiten möglich, wobei die senderseitige Anordnung relativ gegenüber der empfängerseitigen Anordnung um die Verschiebungslänge l* verschoben wird. In **Fig. 5** ist die mittlere Empfängerspule in zwei Empfängerspulen **4.1** und **4.2** aufgeteilt..

**Fig. 6** zeigt mögliche Ausführungsformen der Pole des/der Flussleiteisen(s), wobei der Durchmesser der Welle $D$, der Innendurchmesser der Welle $D_i$, die Flussleiteisenhöhe $c$ eingezeichnet sind. Die Polbreite $a$ bleibt unbeeinflusst.

## Wege zur Ausführung der Erfindung

Messanordnung

Bei der erfindungsgemäßen berührungslosen Sensorvorrichtung gemäß **Fig. 1** zur Bestimmung des mechanischen Drehmomentes wirkt eine Senderspule **2** mit mindestens drei Empfängerspulen **3, 4, 5** zusammen, die in einer bevorzugten Orientierung zum Messobjekt (magnetisierbaren Welle **1)** angeordnet sind. Eine Vorbehandlung der Welle (Messobjekt) **1** entfällt.

Ein Vorteil der Anordnung ist, dass das Messobjekt (Welle **1)** als Hohl- oder Vollwelle ausgeführt sein kann.

Ein weiterer Vorteil der Anordnung in Kombination mit dem Verfahren ist, dass der erfindungsgemäße Drehmomentsensor keine Auftrennung oder Verjüngung des Wellenstranges erfordert. Der Aufnehmer kann bis in den Stillstand messen, dass heißt er ist statisch kalibrierbar und kann weiterhin unter ungünstigen Umgebungsbedingungen (Schmierstoffe, hohe Temperaturen, hohe Biegemomente) eingesetzt werden. Die Sensorvorrichtung kann problemlos um das Messobjekt **1** angeordnet werden.

Wie in **Fig. 1** dargestellt, ist die Senderspulenlängsachse mit ihrer Spulenlängsachse senkrecht zu einer Wellenlängsachse angeordnet, wobei sie in ihrer Verlängerung die Wellenlängsachse schneidet.

Bezogen auf das Messobjekt **1** befindet sich diametral auf der Verlängerung der Senderspulenlängsachse eine Empfängerspule **4.** Zwei weitere Empfängerspulen **3,5** befinden sich in äquidistanten Abständen zur mittleren Empfängerspule **4.** Die Längsachsen der Sender- bzw. Empfängerspulen **2,3,4,5** liegen parallel zueinander angeordnet in einer Ebene. Die beschriebene Anordnung der in äquidistanten Abständen mittig zur Senderspule angeordneten Empfängerspulen wird im Weiteren als symmetrische Messanordnung bezeichnet, wie in **Fig. 1** dargestellt.

Die Senderspule **2** befindet sich auf dem mittleren Joch eines E-förmigen hochpermeablen Flussleiteisens **7.** Die Empfängerspulen **3,4,5** befinden sich auf einem ebenfalls E-förmigen hochpermeablen Flussleiteisen **6,** um den von der Senderspule erzeugten magnetischen Fluss zu bündeln und durch die Empfängerspulen zu leiten. Beide verwendeten E-förmigen Flussleiteisen **6,7** können u.a. als laminierter Transformatorkern ausgeführt sein, um Wirbelstrom- bzw. Hystereseverluste zu minimieren. Bei einer monofrequenten Anregung der Sensoranordnung werden dadurch die Verluste bestmöglich minimiert.

Umfangreiche Untersuchungen haben gezeigt, falls die der Senderspule **2** diametral gegenüberliegende Empfängeranordnung um eine definierte Länge /* gegen die Senderspule verschoben wird (variable asymmetrische Anordnung), erhöht sich die Messempfindlichkeit der Sensoranordnung.

Durch diese Verschiebung würde aber auch die mittlere Empfängerspule **4** gegenüber der Senderspule verschoben werden. Eine Möglichkeit die Sensorempfindlichkeit wie bei der variablen Asymmetrisierung zu erhöhen und gleichzeitig die Lage der Sender- zur mittleren Empfängerspule zu garantieren, ist in **Fig. 2** bzw. **Fig. 3** dargestellt. Dabei wird die laterale Abmessung des Empfängerflussleiteisens **6** (fixierte asymetrische Anordnung) vergrößert oder verkleinert.

Eine weitere Erhöhung der Messempfindlichkeit der Anordnung erhält man durch die Verringerung des Abstandes zwischen Sender- und Empfängeranordnung $D + 2b.$sowohl in der symmetrischen als auch in einer der asymmetrischen Anordnungen.

Eine weitere Möglichkeit die Empfindlichkeit der Vorrichtung zur Erfassung des Drehmomentes zu erhöhen besteht in einer Erhöhung des magnetischen Widerstandes des Empfängerflussleiteisens, durch Einbringen eines Luftspaltes der Breite $r$ in den mittleren Pol, wie in **Fig. 4** und **Fig. 5** dargestellt. Diese Möglichkeit der weiteren Sensibilisierung der Messanordnung kann mit der in **Fig. 1** dargestellten symmetrischen als auch mit der in **Fig. 2,** bzw. **Fig. 3** und **Fig. 5** gezeigten asymmetrischen Messanordnung kombiniert werden.

Ein weiterer Einflussparameter ist die effektive Eingriffslänge, $I_E$ mit der die Messanordnung bezüglich der Gestaltung der Flussleiteisen ausgelegt werden kann. Eine Vergrößerung der effektiven Eingriffslängen /$_E$ bedingt eine stärkere Ausprägung des Messeffektes. Für viele Anwendungsbereiche ist eine möglichst kleine Eingriffslänge $I_E$ wünschenswert, so dass der Messeffekt unter Ausnutzung der anderen genannten Methoden und Möglichkeiten der Empfindlichkeitseinstellung garantiert werden kann. Eine minimale Überdeckung der Stirnflächen von empfänger- bzw. senderseitigen Flussleiteisen sollte aus Stabilitätsgründen bezüglich der Messung nicht unterschritten werden. Eine Unterschreitung ist in spezifischen Anwendungen denkbar.

Neben den Möglichkeiten der Empfindlichkeitserhöhung der Messanordnung in Abhängigkeit von der Anordnung und Gestaltung des Flussleiteisens, kann die Sensitivität durch die Wahl einer optimalen Anregungsfrequenz f erhöht werden. In diesem Zusammenhang spielt der Skineffekt eine wichtige Rolle. Die Eindringtiefe $\sigma_E$ des magnetischen Feldes der Senderspule in das Messobjekt **1** (Welle) ist dabei von der Anregungsfrequenz $f$ des elektrischen Stromes / in der Senderspule **2** und der elektrischen Leitfähigkeit $\sigma$ des Messobjektes abhängig. Der Einfluss der elektrischen Leitfähigkeit $\sigma$ ist besonders bei Messungen an Hohl- oder Vollwellen zu beachten.

Eine weitere mögliche Ausführungsform der Anordnung ist, dass das die beiden Flussleiteisen **6,7** sender- und empfängerseitig die gleiche Form und Größe haben. Der Senderspule **2** stehen wie in **Fig. 5** dargestellt vier Empfängerspulen gegenüber **3, 4.1,4.2, 5;** die in einer bevorzugten Orientierung zum Messobjekt **1** (magnetisierbaren Welle) angeordnet sind. Der Senderspule stehen diametral zwei mittlere Empfängerspulen gegenüber **4.1,4.2,** welche bei einer Verschiebung, um die Verschiebungslänge / * zu beiden möglichen Richtungen abwechselnd die Funktion der zuvor genannten einen mittleren Spule übernehmen. Die Verschiebungslänge / * kann somit variabel eingestellt werden, indem der gesamte Empfängeraufbau relativ zum Sender verschoben wird. Dieser Aufbau wird als variable Asymmetrisierung bezeichnet.

Sender- sowie Empfängerspulen sind auf hochpermeablen E-förmigen Flussleiteisen **6,7** angeordnet. Die dem Messobjekt **1** zugewandten Polflächen der Breite a (Polbreite) können eine Höhe aufweisen, welche geringer ist als der Durchmesser des Messobjektes (vgl. **Fig. 6** oben). Um einen geringeren Einfluss von Biegemomenten auf das zu messende Drehmoment zu garantieren, können die vorderen Polflächen einerseits der Größe des Wellendurchmesser (vgl. **Fig. 6** unten links) oder andererseits in Größe und Form dem Messobjekt angepasst werden (vgl. **Fig. 6** unten rechts), dabei kann sich das Flussleiteisen für die Anpassung von der "Polfläche" zum hinteren Teil verjüngen.

Messverfahren

Die Empfängerspulen sind elektromagnetisch über das Flussleiteisen miteinander verkoppelt, stehen aber nicht elektrisch miteinander in Kontakt. Das erfindungsgemäße Verfahren zur berührungslosen Bestimmung des Drehmomentes einer Welle mit einer Sensoreinrichtung sieht vor, dass ein alternierendes Erregersignal in die Senderspule **2** eingespeist wird und die resultierenden Spannungs- bzw. Stromsignale der Empfängerspulen **3,4,5** miteinander oder auch zu der Spannung bzw. des Stroms der Senderspule **2** verglichen werden.

Wird ein Drehmoment an die Messwelle angelegt, wirkt sich das auf die gesamte Metallstruktur in der Welle aus. Die Querschnitte der Welle werden zunächst einer Torsionsspannung ausgesetzt, die über die gesamte Strecke zwischen der Einspannstelle der Welle und der Angriffsstelle des Drehmomentes konstant ist. In Abhängigkeit vom wirksamen Drehmoment $M_T$ werden die einzelnen Querschnitte der Welle zueinander mit dem Winkel, Verdrehwinkel $\beta$ genannt, gedreht, vergleiche **Fig. 8**. Über die gesamte Strecke macht sich dies durch die Verdrillung der Welle mit dem Verdrillungswinkel $\gamma$ bemerkbar. Der Verdrillungswinkel $\gamma$, vergleiche **Fig. 7,** berechnet sich dabei aus dem wirkenden Drehmoment $\vec{M}_T = \vec{F} \times \vec{R}$, dem Radius der Welle R, dem polaren Flächenträgheitsmoment $Ip$ und dem Schubmodul G nach:

$$\gamma = \frac{R\,M_T}{I_P\,G} \qquad\qquad \text{Gl. 1}$$

Der Verdrillungswinkel $\gamma$ steht in einem direkten Zusammenhang zum Verdrehwinkel $\beta = \gamma L R^{-1}$, wobei $L$ die Länge der tordierten Welle bezeichnet. Die direkte Beziehung zur Berechnung des Verdrehwinkels $\beta$ aus **Gl**. 1 lautet damit:

$$\beta = \frac{M_T\,L}{I_P\,G} \qquad\qquad \text{Gl. 2}$$

Ausgangspunkt für das erfindungsgemäße Messverfahren und die anschließende Auswertung bildet die Beschreibung der Anfangssuszeptibilität

$$\chi_A = \frac{J_M^2}{3\,\lambda_M\,\sigma} \qquad\qquad \text{Gl. 3}$$

eines magnetischen Werkstoffs in Abhängigkeit von seiner Sättigungsmagnetisierung $J_M$, der Sättigungsmagnetostriktion $\lambda_M$ und der in dem Werkstoff wirksamen mechanischen Spannung $\sigma$.

Da die mechanische Spannung $\sigma$ und die Sättigungsmagnetostriktion $\lambda_M$ in einem homogenen Werkstoff unter Belastung , speziell bei Torsionsbelastung, als konstant angenommen werden kann, ist die Änderung der Anfangssuszeptibilität $\chi_A$ wesentlich von einer Veränderung der Sättigungsmagnetisierung $J_M$ abhängig. Die Senderspule **2** erzeugt im senderseitigen Flussleiteisen **7** einen zeitlich veränderlichen magnetischen Fluss $\phi_0$, welcher den Messspalt $b$ und das Messobjekt **1** mittig durchsetzt, sich nachfolgend in das empfängerseitige Flussleiteisen **6** einkoppelt und sich in der symmetrischen Sensoreinstellung gleichmäßig über beide Empfängerspulen **3, 5** verteilt.

Während die mittig angeordnete Empfängerspule **4** vom zeitlich veränderlichen magnetischen Fluss $\phi_0$ durchsetzt wird, werden die Empfängerspulen **3, 5** in der symmetrischen Sensoreinstellung jeweils nur noch vom Fluss $\phi_0/2$ durchflossen. Dieser zeitlich veränderliche magnetische Fluss $\phi_0$ löst im Eingriffsbereich der Welle **1** zwischen dem sender- und empfängerseitigen Flussleiteisen **7, 6** eine Magnetisierung $J$ im Messobjekt **1** aus. Die Magnetisierung $J$, welche mittig im Eingriffsbereich des Sensors im Messobjekt ausgelöst wird, ist für den grundsätzlichen Messeffekt nicht von Belang, spielt aber besonders für die angesprochenen Kompensationsmethoden eine wichtige Rolle.

Wird das Messobjekt **1** durch eine Torsionsbelastung im Eingriffsbereich $l_E$ verformt, ergibt sich zwischen den Empfängerspulen ein effektiver Verdrillungswinkel $\gamma$. Dieser Verdrillungswinkel $\gamma$ ist über die Eingriffslänge $l_E$ des Sensors

mittels der Beziehung $\beta = \gamma\, L R^{-1}$ in einen Verdrehungswinkel $\beta$ der Wellenquerschnittsflächen zwischen den Empfängerflussleiteisen übertragbar. Somit wird auch der Sättigungsmagnetisierungsvektor $J_M$ effektiv im Eingriffbereich $l_E$ des Sensors um den Verdrehwinkel $\beta$ verschoben. Diese Auslenkung des Sättigungsmagnetisierungsvektors $J_M$ führt zu einer Asymmetrisierung der gleichmäßigen Verteilung des magnetischen Flusses $\phi_0$ über die Empfängerspulen **3, 5** in der symmetrischen Anordnung bei einem nicht belasteten Messobjekt 1. Jenes Verhältnis der magnetischen Flüsse, welche die Empfängerspulen **3** ($\phi_2$), **5** ($\phi_1$) durchsetzten kann wie folgt

$$\frac{\phi_2}{\phi_1} \cong 1 + \left(\frac{\chi_A}{1+\chi_A}\right)\beta^2 \qquad\qquad \textbf{Gl. 4}$$

angegeben werden.

Im unbelasteten Zustand der Welle wird der magnetische Fluss gleichmäßig über beide Empfängerspulen verteilt, wobei $\phi_1 = \phi_2 = \phi_0/2$ entspricht. Wird hingegen die Welle tordiert, asymmetrisiert der Verdrehungswinkel die symmetrische Flussverteilung. Im Zusammenhang mit **Gl. 2** folgt, dass die magnetische Flussverteilung bei einer vorausgesetzten Kenntnis der Eingriffslänge $l_E$ nur noch vom wirkenden Drehmoment $M_T$ abhängig ist.

$$\frac{\phi_2}{\phi_1} \cong 1 + \left(\frac{\chi_A}{1+\chi_A}\right)\left(\frac{M_T\, l_E}{l_P\, G}\right)^2 \qquad\qquad \textbf{Gl. 5}$$

Die zeitlich veränderlichen magnetischen Flüsse induzieren entsprechend dem Faradayschen Induktionsgesetz Spannungen in den Empfängerspulen **3, 4** und **5,** welche nachfolgend entsprechend ihrer voneinander abweichenden Amplitude oder vorzugsweise ihrer unterschiedlichen Phasenlage ausgewertet werden können. Dabei ist es möglich einen Vergleich der Spannungen oder Phasenlagen zwischen der Senderspule **2** und den Empfängerspulen **3, 4** und **5** anzustellen oder direkt zwischen den Empfängerspulen **3, 4** und **5** zu messen.

Die Besonderheit des Verfahrens zur Bestimmung des Drehmoment besteht allerdings im Vergleich der Phasenlagen der aufgeprägten Spannungen bzw. Ströme der Senderspule zu den in den Empfängerspulen induzierten Spannungen bzw. Strömen. Erfindungsgemäß ist dabei die Phasenlage zwischen den Spannungen bzw. Strömen der Sender- **2** zur diametral mittleren Empfängerspule **4** nicht vom mechanischen Drehmoment, welches auf das Messobjekt **1** wirkt, abhängig. Die Phasenlage zwischen den Spannungen bzw. Strömen der Senderspule zu den beidseitig in äquidistanten Abständen angeordneten Empfängerspulen **3,5** induzierten Spannungen bzw. Strömen ist hingegen von der mechanischen Belastung des Messobjektes **1** anhängig. Dabei ist es möglich, die vom mechanischen Drehmoment abhängige Phasenlage zwischen den äquidistant angeordneten Empfängerspulen durch Auswertung der separaten Größen in Bezug zur Phasenlage gegenüber der Senderspule **2** zu messen.

Ferromagnetische Wellen besitzen herstellungsbedingt innere fest eingeprägte und belastungsbedingt variierende Zug- und Druckspannungen, welche sich auch bei Abwesenheit eines wirkenden mechanischen Drehmomentes dem Messsignal (Spannung, Strom oder Phase) aufprägen. Belastungsbedingte Änderungen der Eigenspannungen im Material des Messobjektes führen deshalb zu messbaren Hystereseeffekten, welche die Auswertung des Messsignals und somit die Bestimmung des mechanischen Drehmomentes erschweren.

Umfassende Untersuchungen zeigten, dass Hystereseeffekte besonders bei Messungen in der symmetrischen Sensoreinstellung **(Fig. 1)** gemessen werden, während die Hystereseeffekte durch Verwendung einer asymmetrischen Messanordnung **(Fig. 2)** effektiv unterdrückt werden können.

Eine weitere Methode der Unterdrückung von eigenspannungsbedingten Hystereseeffekten ist durch die Wahl des Senderspulenstromes $l$ gegeben. Eine Erhöhung des Sendespulenstromes $l$ verringert die Ausprägung von Hystereseeffekten bei schnell auftretenden mechanischen Lastwechseln am Messobjekt (Welle) **1.**

Weiterhin besitzen ferromagnetische Wellen eine materialspezifische, elektrische Leitfähigkeit $\sigma$, die sich in Bezug auf extreme Belastungsbedingungen mit einhergehenden Veränderungen der Temperatur (Arbeits- oder Umgebungstemperatur) stark verändert. Alle kontaktlosen induktiven Messprinzipien sind somit temperaturabhängig. Besonders in der symmetrischen Sensoreinstellung **(Fig. 1)** kann die Überlagerung aus Hysterese und Leitfähigkeitsänderung nicht voneinander getrennt werden. Für die asymmetrische Drehmomentmessung gilt, dass die Phasenmessung zwischen den Spannungen/Strömen der Senderspule in Bezug auf die mittlere Empfängerspule eine Trennung von Hysterese- und elektrischen Leitfähigkeitseffekten möglich macht, insofern äußere Störeinflüsse vernachlässigbar sind.

Die äußeren in äquidistanten Abstand zur mittleren Empfängerspule angeordneten Empfängerspulen **3,5** können bezüglich der drehmomentabhängigen Strom-/Spannungs- und Phasenlagenmessung als komplexe Brückenschaltung betrieben werden. Äußere Störeinflüsse werden somit schon durch den Betrieb in einer Differenzschaltung effektiv minimiert.

**Fig. 9** zeigt die beispielhafte Messung der Phasendifferenz in Abhängigkeit vom mechanischen Drehmoment einer Hohlwelle (St-37) mit einem Außendurchmesser von $D = 30cm$ und einer Wandstärke $d_w = 2mm$ in der symmetrischen Anordnung mit der Verschiebungslänge/* = 0mm. Der Senderspule wurde ein Strom $I = 260mA$ bei einer Frequenz $f = 600\ Hz$ eingeprägt. Die Eingriffslänge des Sensors beträgt $l_E = 60mm$. Die Pfeilrichtung kennzeichnet die Belastung (Pfeilspitze rechts) und die Entlastung (Pfeilspitze links).

**Fig. 10** zeigt die Messung der Phasendifferenz in Abhängigkeit vom mechanischen Drehmoment an einer Hohlwelle (St-37) mit einem Außendurchmesser von $D = 30cm$ und einer Wandstärke von $d_w = 2mm$ in der asymmetrischen Anordnung mit der Verschiebungslänge/* = 1,5mm. Der Senderspule wurde ein Strom $I = 260mA$ bei einer Frequenz $f = 400\ Hz$ eingeprägt. Die Eingriffslänge des Sensors ist $l_E = 60mm$. Die Pfeilrichtung kennzeichnet die Belastung (Pfeilspitze rechts) und die Entlastung (Pfeilspitze links).

**Fig. 11** zeigt die Messung der Phasendifferenz in Abhängigkeit vom mechanischen Drehmoment an einer Hohlwelle (St-37) mit einem Außendurchmesser von $D = 30\ cm$ und einer Wandstärke von $d_w = 2mm$ in der asymmetrischen Anordnung mit der Verschiebungslänge/* = 1,5mm. Der Senderspule wurde ein Strom $I = 260mA$ bei einer Frequenz $f = 400\ Hz$ eingeprägt. Die Sensitivität ist im Vergleich zu **Fig. 10** durch eine Vergrößerung der Messspaltweite verringert. Die Eingriffslänge des Sensors beträgt $l_E = 60mm$. Die Pfeilrichtung kennzeichnet die Belastung (Pfeilspitze rechts) und die Entlastung (Pfeilspitze links).

**Fig. 12** Messung der Phasendifferenz in Abhängigkeit vom mechanischen Drehmoment an einer Hohlwelle (St-37) mit einem Außendurchmesser von $D = 40\ cm$ und einer Wandstärke von $d_w = 2mm$ in der asymmetrischen Anordnung mit der Verschiebungslänge/* = 10,0mm. Der Senderspule wurde ein Strom $I = 800\ mA$ bei einer Frequenz $f = 310\ Hz$ eingeprägt. Die Eingriffslänge des Sensors beträgt $l_E = 100\ mm$. Die Pfeilrichtung kennzeichnet die Belastung (Pfeilspitze rechts) und die Entlastung (Pfeilspitze links).

Die in den obigen Beispielen angegebenen Empfängerspulen können auch durch andere geeignete magnetfeldsensitive Detektionsgeräte (z. B. Hall-Sensoren) ersetzt werden

## Bezugszeichenliste

| | |
|---|---|
| 1 | Welle (Messobjekt) |
| 2 | Senderspule |
| 3, 4, 5 | Empfängerspulen |
| 6,7 | Flussleiteisen |
| $D$ | Durchmesser der Welle |
| $b$ | Luftspalt |
| a | Polbreite (Flussleiteisen) |
| $l_E$ | Eingriffslänge (Flussleiteisen) |
| $l_0$ | mittlerer Polabstand (Flussleiteisen) |
| $l_1$ | mittlere Pollänge (Flussleiteisen) |
| $D_i$ | Innendurchmesser der Welle |
| c | Flussleiteisenhöhe |
| $l*$ | Verschiebungslänge (Asymmetrisierungslänge) |
| $r$ | Teilungsbreite (Empfängerkerns 6) |
| $I, f$ | Strom und Frequenz der Senderspule |

## Patentansprüche

**1.** Anordnung zur berührungslosen Bestimmung des Drehmoments in einer Welle (1) mit einer Wellenlängsachse, umfassend eine Senderspule (2), die auf einem E-förmigen senderseitigen Flussleiteisen (7) angeordnet ist, und mindestens ein erstes (4), ein zweites (3) und ein drittes (5) magnetfeldsensitives Detektionsgerät die auf einem E-förmigen empfängerseitigen Flussleiteisen (6) angeordnet sind, **dadurch gekennzeichnet,**

a. **dass** das erste magnetfeldsensitive Detektionsgerät (4) bezogen auf die zu messende Welle (1) der Senderspule (2) diametral gegenüberliegend auf der Verlängerung der Spulenachse der Senderspule (**2**) angeordnet ist oder die drei magnetfeldsensitiven Detektionsgeräte (3,4,5) gegenüber der Senderspule (2) um eine Verschiebungslänge (/*) entlang der Wellenlängsachse versetzt angeordnet sind und
b. **dass** das zweite und das dritte magnetfeldsensitive Detektionsgerät (**3,5**) in Abständen zu dem ersten magnetfeldsensitiven Detektionsgerät (**4**) angeordnet sind.

**2.** Anordnung nach Anspruch 1, **dadurch gekennzeichnet, dass** das erste magnetfeldsensitive Detektionsgerät eine erste Empfängerspule (3) ist, das zweite magnetfeldsensitive Detektionsgerät eine zweite Empfängerspule (4) ist, und das dritte magnetfeldsensitive Detektionsgerät eine dritte Empfängerspule (5) ist.

**3.** Anordnung nach Anspruch 1 oder 2, **dadurch gekennzeichnet, dass** das empfängerseitige (6) und das senderseitige (7) Flussleiteisen in Form und/oder Größe identisch ausgebildet sind.

**4.** Anordnung nach Anspruch 1 oder 2, **dadurch gekennzeichnet, dass** das empfängerseitige Flussleiteisen **(6)** größer oder kleiner als das senderseitige Flussleiteisen **(7)** ausgebildet ist.

**5.** Anordnung nach einem der vorhergehenden Ansprüche, **dadurch gekennzeichnet, dass** der mittlere Pol des empfängerseitigen Flussleiteisens **(6)** und/oder des senderseitigen Flussleiteisens **(7)** im Vergleich zu den äußeren Polen in doppelter Breite ausgeführt ist.

**6.** Anordnung nach einem der vorhergehenden Ansprüche, wobei das erste magnetfeldsensitive Detektionsgerät (4) gegenüber der Senderspule (2) um die Verschiebungslänge /*) entlang der Wellenlängsachse versetzt angeordnet ist, **dadurch gekennzeichnet, dass** die Verschiebungslänge (/*) maximal die Polbreite (*a*) der äußeren Pole des senderseitigen Flussleiteisens (7) beträgt, um eine stabile Messwertaufnahme zu ermöglichen.

**7.** Anordnung nach einem der Ansprüche 2 bis 6, sofern rückbezogen auf Anspruch 2, **dadurch gekennzeichnet, dass** die zweite und die dritte Empfängerspule **(3,5)** in gleichen Abständen zu der ersten Empfängerspule **(4)** angeordnet sind.

**8.** Anordnung nach einem der Ansprüche 2 bis 6, sofern rückbezogen auf Anspruch 2, **dadurch gekennzeichnet, dass** die zweite und die dritte Empfängerspule **(3,5)** in unterschiedlichen Abständen zu der ersten Empfängerspule **(4)** angeordnet sind.

**9.** Anordnung nach einem der vorhergehenden Ansprüche, **dadurch gekennzeichnet, dass** der mittlere Pol des empfängerseitigen Flussleiteisens (6) um eine Spaltbreite (r) aufgespalten ist.

**10.** Anordnung nach einem der Ansprüche 2 bis 9, sofern rückbezogen auf Anspruch 2, **dadurch gekennzeichnet, dass** die erste Empfängerspule **(4)** als zwei Empfängerspulen **(4.1, 4.2)** ausgeführt ist.

**11.** Verfahren zur berührungslosen Bestimmung des Drehmoments in einer Welle (1) unter Verwendung der Anordnung gemäß einem der Ansprüche 2 bis 10, sofern rückbezogen auf Anspruch 2, **dadurch gekennzeichnet, dass** der Senderspule (2) als Erregersignal ein mit einer elektrischen Spannung einhergehender elektrischer Strom mit einer vorgegebenen Anregungsfrequenz (f) aufgeprägt wird, und die Phasenlage der aufgeprägten Spannung der Senderspule (2) mit den Phasenlagen der dadurch in den Empfängerspulen induzierten Spannungen verglichen wird oder die Phasenlage des aufgeprägten Stromes der Senderspule (2) mit den Phasenlagen der dadurch in den Empfängerspulen induzierten Ströme verglichen wird.

**12.** Verfahren nach Anspruch 11, **dadurch gekennzeichnet, dass** die zweite (3) und die dritte (5) Empfängerspule in äquidistanten Abständen beidseitig der ersten Empfängerspule (4) angeordnet sind, und dass die Phasenlage der aufgeprägten Spannung der Senderspule (2) mit den Phasenlagen der in der zweiten (3) und dritten (5) Empfängerspule (3,5) induzierten Spannungen verglichen wird oder die Phasenlage des aufgeprägten Stromes der Senderspule (2) mit den Phasenlagen der in der zweiten (3) und dritten (5) Empfängerspule induzierten Ströme verglichen wird.

**13.** Verfahren nach Anspruch 11, **dadurch gekennzeichnet, dass** bei der Messsignalauswertung zur Erfassung des wirksamen Drehmoments Korrelationsmethoden eingesetzt werden.

**14.** Verfahren nach einem der Ansprüche 11 bis 13, **dadurch gekennzeichnet, dass** die zweite (3) und die dritte (5) Empfängerspule in einer Differenzschaltung betrieben werden.

**15.** Verfahren nach einem der Ansprüche 11 bis 14, **dadurch gekennzeichnet, dass** eine Phasenmessung zwischen den Spannungen oder Strömen der Senderspule (2) und der ersten Empfängerspule (4) durchgeführt wird.

**Claims**

1. Arrangement for contactlessly determining the torque in a shaft (1) with a shaft longitudinal axis, comprising a transmitter coil (2) which is arranged on an E-shaped transmitter-side flux guide iron core (7), and at least a first magnetic field-sensitive detection device (4), a second magnetic field-sensitive detection device (3) and a third magnetic field-sensitive detection device (5) which are arranged on an E-shaped receiver-side flux guide iron core (6), **characterized**

   a. **in that** the first magnetic field-sensitive detection device (4) is arranged on the extension of the coil axis of the transmitter coil (2) diametrically opposite in relation to the shaft (1), which is to be measured, of the transmitter coil (2), or the three magnetic field-sensitive detection devices (3, 4, 5) are arranged opposite the transmitter coil (2) in a manner offset by a displacement length ($l$*) along the shaft longitudinal axis, and
   b. **in that** the second and the third magnetic field-sensitive detection device (3, 5) are arranged at distances from the first magnetic field-sensitive detection device (4).

2. Arrangement according to Claim 1, **characterized in that** the first magnetic field-sensitive detection device is a first receiver coil (3), the second magnetic field-sensitive detection device is a second receiver coil (4), and the third magnetic field-sensitive detection device is a third receiver coil (5) .

3. Arrangement according to Claim 1 or 2, **characterized in that** the receiver-side flux guide iron core (6) and the transmitter-side flux guide iron core (7) are identical in shape and/or size.

4. Arrangement according to Claim 1 or 2, **characterized in that** the receiver-side flux guide iron core (6) is larger or smaller than the transmitter-side flux guide iron core (7).

5. Arrangement according to one of the preceding claims, **characterized in that** the central pole of the receiver-side flux guide iron core (6) and/or of the transmitter-side flux guide iron core (7) is double the width in comparison to the outer poles.

6. Arrangement according to one of the preceding claims, wherein the first magnetic field-sensitive detection device (4) is arranged opposite the transmitter coil (2) in a manner offset by the displacement length ($l$*) along the shaft longitudinal axis, **characterized in that** the displacement length ($l$*) is at most equal to the pole width ($a$) of the outer poles of the transmitter-side flux guide iron core (7), in order to allow stable measurement value recording.

7. Arrangement according to one of Claims 2 to 6, to the extent that they refer back to Claim 2, **characterized in that** the second and the third receiver coil (3, 5) are arranged at identical distances from the first receiver coil (4).

8. Arrangement according to one of Claims 2 to 6, to the extent that they refer back to Claim 2, **characterized in that** the second and the third receiver coil (3, 5) are arranged at different distances from the first receiver coil (4).

9. Arrangement according to one of the preceding claims, **characterized in that** the central pole of the receiver-side flux guide iron core (6) is split by a gap width (r).

10. Arrangement according to one of Claims 2 to 9, to the extent that they refer back to Claim 2, **characterized in that** the first receiver coil (4) is designed as two receiver coils (4.1, 4.2).

11. Method for contactlessly determining the torque in a shaft (1) using the arrangement according to one of Claims 2 to 10, to the extent that they refer back to Claim 2, **characterized in that** an electric current which is associated with an electrical voltage is impressed onto the transmitter coil (2) as exciter signal at a prespecified excitation frequency (f), and the phase position of the impressed voltage of the transmitter coil (2) is compared with the phase positions of the voltages which are induced in the receiver coils as a result, or the phase position of the impressed current of the transmitter coil (2) is compared with the phase positions of the currents which are induced in the receiver coils as a result.

12. Method according to Claim 11, **characterized in that** the second receiver coil (3) and the third receiver coil (5) are arranged at equal distances on either side of the first receiver coil (4), and **in that** the phase position of the impressed voltage of the transmitter coil (2) is compared with the phase positions of the voltages which are induced in the second (3) receiver coil and third (5) receiver coil (3, 5), or the phase position of the impressed current of the transmitter coil (2) is compared with the phase positions of the currents which are induced in the second receiver coil (3) and third receiver coil (5).

13. Method according to Claim 11, **characterized in that** correlation methods are used in the measurement signal evaluation operation for detecting the active torque.

14. Method according to one of Claims 11 to 13, **characterized in that** the second receiver coil (3) and the third receiver coil (5) are operated in a differential circuit.

15. Method according to one of Claims 11 to 14, **characterized in that** a phase measurement is carried out between the voltages or currents of the transmitter coil (2) and of the first receiver coil (4).

**Revendications**

1. Agencement pour la détermination sans contact du couple dans un arbre (1) avec un axe longitudinal d'arbre, comprenant une bobine émettrice (2) qui est placée sur un fer conducteur de flux (7) en forme de E se trouvant du côté émetteur et au moins un premier (4), un deuxième (3) et un troisième (5) instrument de détection magnéto-sensitif qui sont placés sur un fer conducteur (6) de flux en forme de E se trouvant du côté émetteur, **caractérisé en ce que**

a. par rapport à l'arbre (1) qui doit être mesuré, le premier instrument de détection (4) magnéto-sensitif de la bobine émettrice (2) est placé en opposition diamétrale sur le prolongement de l'axe de bobine de la bobine émettrice (2) ou les trois instruments de détection (3, 4, 5) magnéto-sensitifs sont placés en étant décalés par rapport à la bobine émettrice (2) d'une longueur de déplacement ($l^*$) le long de l'axe longitudinal de l'arbre et
b. **en ce que** le deuxième et le troisième instrument de détection (3, 5) magnéto-sensitif sont placés avec des écarts par rapport au premier instrument de détection (4) magnéto-sensitif.

2. Agencement selon la revendication 1, **caractérisé en ce que** le premier instrument de détection magnéto-sensitif est une première bobine réceptrice (3), le deuxième instrument de détection magnéto-sensitif est une deuxième bobine réceptrice (4) et le troisième instrument de détection magnéto-sensitif est une troisième bobine réceptrice (5).

3. Agencement selon la revendication 1 ou la revendication 2, **caractérisé en ce que** les fers conducteurs de flux côté récepteur (6) et côté émetteur (7) sont de forme et/ou de dimension identique.

4. Agencement selon la revendication 1 ou la revendication 2, **caractérisé en ce que** le fer conducteur (6) de flux côté récepteur est conçu en étant plus grand ou plus petit que le fer conducteur de flux (7) côté émetteur.

5. Agencement selon l'une quelconque des revendications précédentes, **caractérisé en ce que** la borne polaire centrale du fer conducteur de flux (6) côté récepteur et/ou du fer conducteur de flux (7) côté émetteur est réalisé en double largeur par rapport aux bornes polaires extérieures.

6. Agencement selon l'une quelconque des revendications précédentes, le premier instrument de détection (4) magnéto-sensitif étant placé en étant décalé par rapport à la bobine émettrice (2) de la longueur de déplacement ($l^*$) le long de l'axe longitudinal de l'arbre, **caractérisé en ce que** la longueur de déplacement ($l^*$) s'élève au maximum à la largeur de borne polaire ($a$) des bornes polaires extérieures du fer conducteur de flux (7) côté émetteur, pour permettre un enregistrement stable des valeurs mesurées.

7. Agencement selon l'une quelconque des revendications 2 à 6, dans la mesure où elle se réfère à la revendication 2, **caractérisé en ce que** la deuxième et la troisième bobine réceptrice (3, 5) sont placées à des écarts identiques par rapport à la première bobine réceptrice (4).

8. Agencement selon l'une quelconque des revendications 2 à 6, dans la mesure où elle se réfère à la revendication 2, **caractérisé en ce que** la deuxième et la troisième bobine réceptrice (3, 5) sont placées à des écarts différents par rapport à la première bobine réceptrice (4).

9. Agencement selon l'une quelconque des revendications précédentes, **caractérisé en ce que** la borne polaire centrale du fer conducteur de flux (6) côté récepteur est fendue d'une largeur de fente (r).

**10.** Agencement selon l'une quelconque des revendications 2 à 9, dans la mesure où elle se réfère à la revendication 2, **caractérisé en ce que** la première bobine réceptrice (4) est réalisée sous la forme de deux bobines réceptrices (4.1, 4.2).

**11.** Procédé pour la détermination sans contact du couple dans un arbre (1) en utilisant l'agencement selon l'une quelconque des revendications 2 à 10, dans la mesure où elle se réfère à la revendication 2, **caractérisé en ce qu'**on applique à la bobine émettrice (2) en tant que signal excitateur un courant électrique s'accompagnant d'une tension électrique avec une fréquence d'excitation (f) prédéfinie et **en ce que** la position de phase de la tension appliquée de la bobine émettrice (2) est comparée avec les positions de phases des tensions induites de ce fait dans les bobines réceptrices ou la position de phase du courant appliqué de la bobine émettrice (2) est comparée avec les positions de phases des courants induits de ce fait dans les bobines réceptrices.

**12.** Procédé selon la revendication 11, **caractérisé en ce que** la deuxième (3) et la troisième (5) bobines réceptrices sont placées avec des écarts équidistants de part et d'autre de la première bobine réceptrice (4) et **en ce que** la position de phase de la tension appliquée de la bobine émettrice (2) est comparée avec les positions de phases des tensions induites dans la deuxième (3) et dans la troisième (5) bobine réceptrice (3, 5) ou la position de phase du courant appliqué de la bobine émettrice (2) est comparée avec les positions de phases des courants induits dans la deuxième (3) et dans la troisième (5) bobine réceptrice.

**13.** Procédé selon la revendication 11, **caractérisé en ce que** lors de l'évaluation des signaux de mesure pour détecter le couple efficace, des méthodes de corrélation sont mises en oeuvre.

**14.** Procédé selon l'une quelconque des revendications 11 à 13, **caractérisé en ce que** la deuxième (3) et la troisième (5) bobine réceptrice fonctionnent dans un circuit différentiel.

**15.** Procédé selon l'une quelconque des revendications 11 à 14, **caractérisé en ce qu'**une mesure de phase est réalisée entre les tensions ou courants de la bobine émettrice (2) et la première bobine réceptrice (4).

**Fig. 1**

**Fig. 2**

**Fig. 3**

**Fig. 4**

Fig. 5

Fig. 6

**Fig. 7**

**Fig. 8**

**Fig. 9**

**Fig. 10**

**Fig. 11**

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006017727 A1
- DE 3704049 A1
- EP 0338227 A2
- EP 1319934 A2
- GB 2232490 A
- EP 0261980 A2
- EP 1400795 A1

**In der Beschreibung aufgeführte Nicht-Patentliteratur**

- **JÄHNIG, L.** Drehmomentsensoren auf der Basis des magnetostriktiven Effekts. *VDI-Berichte,* 1984, vol. 509, 187-191